# EUROPÄISCHE PATENTSCHRIFT

(11) **EP 0 610 752 B1**
(45) Veröffentlichungstag und Bekanntmachung des Hinweises auf die Patenterteilung: **29.07.1998**
(21) Anmeldenummer: 94101273.4
(22) Anmeldetag: 28.01.1994
(51) Int. Cl.: C08G 18/40, C08G 18/48

(54) **Verfahren zur Herstellung von Schaumstoffen auf Isocyanatbasis**
Process for the preparation of isocyanate-based foams
Procédé pour la préparation de mousses à partir d'isocyanate

(30) Priorität: 10.02.1993 DE 4303886; 24.08.1993 DE 4328383
(43) Veröffentlichungstag der Anmeldung: 17.08.1994
(73) Patentinhaber: BAYER AG, 51368 Leverkusen (DE)
(72) Erfinder: Lamberts, Wilhelm, Dr., D-51373 Leverkusen (DE); Dietrich, Werner, Dr., D-51519 Odenthal (DE)

(56) Entgegenhaltungen:
- WO-A-92/16573

## Beschreibung

Die Erfindung betrifft die Herstellung von Schaumstoffen auf Isocyanatbasis unter Verwendung von unter Verschäumungsbedingungen verdampfbaren Kohlenwasserstoffen, vorzugsweise solchen mit einem Siedepunkt von 10 bis 80°C/760 mm Hg, als Treibmittel und speziellen Polyether-Polyol-Mischungen, bei denen der als Treibmittel verwendete Kohlenwasserstoff teilweise gelöst und teilweise dispergiert ist, so daß eine Emulsion entsteht.

Es ist bereits bekannt, daß Schaumstoffe auf Isocyanatbasis unter Verwendung von derartigen Kohlenwasserstoffen als Treibmittel hergestellt werden (vgl. z.B. US-PS-3 072 582, EP-A 394 769, DE-OS 2 544 560, EP-A 421 269, US-PS 4 585 807). In geschlossenzelligen Schaumstoffen sind diese darüberhinaus als wärmedämmendes Zellgas wirksam. Zu den bisher am weitest verbreiteten Dämm- und Treibgasen für Schaumstoffe aus Polyurethanen, Polystyrol, Polyvinylchlorid, Phenol-Formaldehyd u.a. gehören u.a. die Chlorfluorkohlenwasserstoffe Trichlorfluormethan (R 11), Dichlordifluormethan (R 12), Trichlorfluorethan (R 13).

Diese Treibmittel haben indessen den Nachteil, daß sie infolge ihrer hohen Stabilität in die Stratosphäre gelangen, wo sie aufgrund ihres Gehaltes an Chlor zum Abbau des dort vorhandenen Ozons beitragen sollen. Aus diesem Grunde ist vorgesehen, die Produktion von Chlorfluorchlorkohlenwasserstoffen in naher Zukunft einzustellen.

Zu den Treibmitteln, die die obengenannten Nachteile nicht aufweisen, gehören die unter Verschäumungsbedingungen verdampfbaren Kohlenwasserstoffe wie n- und iso-Pentan oder Cyclopentan. Es hat sich aber gezeigt, daß bei Verwendung dieser Treibmittel noch nicht alle Anforderungen aus der Verschäumungspraxis erfüllt werden. Insbesondere wird in der Regel eine für hochwertige Hartschaumanwendung erforderliche Dämmleistung (niedrige Wärmeleitzahl) nicht erreicht.

Aus der WO-A-92/16573 ist ein Verfahren zur Herstellung von Schaumstoffen auf Isocyanatbasis unter Verwendung der erwähnten Kohlenwasserstoffe bekannt, bei dem zwingend zur Erhöhung der Löslichkeit des Treibmittels immer ein halogenfreies Flammschutzmittel zugesetzt werden muß.

Aufgabe der Erfindung war daher, die Wärmeleitzahl von Polyurethan-Hartschaumstoffen, die unter Verwendung von derartigen Kohlenwasserstoffen als Treibmittel hergestellt werden, zu verbessern. Dies gelingt überraschenderweise dadurch, daß man als Polyolkomponente eine spezielle Polyetherpolyol-Mischung verwendet. In ihr ist das Kohlenwasserstoff-Treibmittel partiell gelöst, so daß eine Polyol/Treibmittel-Emulsion vorliegt. Die Verwendung dieser speziellen Polyol/ Treibmittel-Emulsion gemäß Erfindung führt zu einer 10 bis 15%igen Verringerung der Wärmeleitfähigkeit im Polyurethan-Hartschaumstoff (im Vergleich zu einem Polyurethan-Hartschaumstoff, in dessen Polyol das Treibmittel vollständig gelöst ist).

Gegenstand der Erfindung ist ein Verfahren zur Herstellung von Schaumstoffen auf Isocyanatbasis durch Umsetzung von
1) Polyisocyanaten mit
2) mindestens zwei gegenüber Isocyanaten aktive Wasserstoffatome aufweisenden Verbindungen vom Molekulargewicht 400 bis 10.000 in Gegenwart von
3) unter den Verschäumungsbedingungen verdampfbaren Kohlenwasserstoffen als Treibmittel und gegebenenfalls in Gegenwart von
4) Verbindungen mit mindestens zwei gegenüber Isocyanaten reaktionsfähigen Wasserstoffatomen und einem Molekulargewicht von 32 bis 399 sowie gegebenenfalls in Gegenwart von
5) weiteren Treibmitteln und an sich bekannten Hilfs-und Zusatzstoffen,
dadurch gekennzeichnet, daß als Komponente 2) Mischungen von a) mindestens zwei gegenüber Isocyanaten aktive Wasserstoffatome aufweisenden, stickstoffreien Polyethem, die Oxyethylenreste enthalten, und b) mindestens zwei gegenüber Isocyanaten aktive Wasserstoffatome aufweisenden Polyethern, die von Oxyethylengruppen frei sind, wobei die Polyetherkomponente 2a) eine Funktionalität von höchstens 4 und die Polyetherkomponente 2b) eine Funktionalität von mindestens 4 aufweist, verwendet werden, in denen der als Treibmittel verwendete Kohlenwasserstoff teilweise gelöst, teilweise dispergiert ist, so daß eine Emulsion entsteht.

Erfindungsgemäß ist bevorzugt, daß
- als Treibmittel C₃-C₇-Kohlenwasserstoffe verwendet werden,
- als Treibmittel n- und/oder i-Pentan und/oder Cyclopentan verwendet wird,
- als Treibmittel Mischungen aus Cycloalkanen und linearen oder verzweigten Alkanen verwendet werden,
- als Co-Treibmittel 0,5 bis 3,5 Gew.-%, vorzugsweise 1 bis 2,5 Gew.-%, bezogen auf Komponente 2), Wasser eingesetzt wird,
- die Polyetherkomponente 2a) in einer Vorreaktion mit überschüssigem Polyisocyanat zu einem Isocyanatgruppen aufweisenden Prepolymer umgesetzt wird, das dann mit den übrigen Komponenten unter Bildung des Schaumstoffs zur Reaktion gebracht wird,
- die Polyetherkomponente 2a) ein Trimethylolpropan- und/oder Glyzeringestarteter Polyether und die Polyetherkomponente 2b) ein Sucrose- und/oder Sorbit-gestarteter Polyether ist,
- der Polyethermischung 2) 5 bis 40 Gew.-%, vorzugsweise 10 bis 20 Gew.-%, eines mindestens zwei gegenüber Isocyanaten aktive Wasserstoffatome aufweisenden Polyesters beigemischt wird, und
- als Polyester ein Polyester der Phthal- und/oder Terephthalsäure der OH-Zahl 100 bis 500, vorzugsweise 200 bis 400, verwendet wird.

Vorzugsweise enthält die Komponente 2) zu 5-50 Gew.-%, insbesondere 10-20 Gew.-%, die Polyetherkomponente a) und zu 50-95 Gew.-%, insbesondere 80-90 Gew.-%, die Polyetherkomponente b).

Erfindungsgemäß ergeben sich folgende Vorteile:
1) Dadurch, daß in der Regel der überwiegende Anteil des Kohlenwasserstoff-Treibmittels im Polyol gelöst ist, wird die Viskosität der Polyolkomponenten erniedrigt, wodurch eine gute maschinentechnische Verarbeitbarkeit gesichert ist.
2) Wie bereits erwähnt, wird eine erniedrigte Wärmeleitfähigkeit, insbesondere mit Cyclopentan als Treibmittel, erreicht.
3) Die erfindungsgemäß bevorzugte Kombination des Polyethergemischs mit Polyestern trägt zu einer dauerhaften Verarbeitbarkeit der Polyether-Treibmittelmischung bei.

Bevorzugt ist erfindungsgemäß die Herstellung von Polyurethanschaumstoffen und/oder die Herstellung von Polyisocyanuratschaumstoffen.

Die Herstellung von Schaumstoffen auf Isocyanatbasis ist an sich bekannt und z.B. in den deutschen Offenlegungsschriften 1 694 142, 1 694 215 und 1 720 768 sowie im Kunststoff-Handbuch Band VII, Polyurethane, herausgegeben von Vieweg und Höchtlen, Carl Hanser Verlag, München 1966, sowie in der Neuauflage dieses Buches, herausgegeben von G. Oertel, Carl Hanser Verlag München, Wien 1983, beschrieben.

Es handelt sich dabei vorwiegend um Urethan- und/oder Isocyanurat- und/oder Allophanat- und/oder Uretdion und/oder Harnstoff- und/oder Carbodiimidgruppen aufweisende Schaumstofe.

Für die Herstellung der Schaumstoffe auf Isocyanatbasis werden eingesetzt:
1. Aliphatische, cycloaliphatische, araliphatische, aromatische oder heterocyclische Polyisocyanate, wie sie z.B. von W. Siefken in Justus Liebigs Annalen der Chemie, 562 Seiten 75 bis 136, beschrieben werden, beispielsweise solche der Formel,

   Q(NCO)ₙ,

   in der
   - n: 2 bis 4, vorzugsweise 2 und 3, und
   - Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten,
   z.B. solche Polyisocyanate, wie sie in der DE-OS 2 832 253, Seiten 10 bis 11, beschrieben werden.
   Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4-und/oder 2,6-Toluylendiisocyanat bzw. vom 4,4'-und/oder 2,4'-Diphenylmethandiisocyanat ableiten.
2. Ausgangskomponente ist ferner das bereits genannte Gemisch von Polyethern mit mindestens zwei gegenüber Isocyanaten reaktionsfähigen Wasserstoffatomen von einem Molekulargewicht in der Regel von 400 bis 10.000. Hierunter versteht man insbesondere Hydroxylgruppen aufweisende Polyether, speziell solche vom Molekulargewicht 1.000 bis 6.000, vorzugsweise 2.000 bis 6.000, wie sie für die Herstellung von homogenen und von zellförmigen Polyurethanen an sich bekannt sind und wie sie z.B. in der DE-OS 28 32 253, Seiten 11 bis 18, beschrieben werden. Die in den stickstoffreien Polyethern gemäß Komponente 2a) enthaltenen Oxyethylenreste entstehen durch Addition von Ethylenoxid (EO), gegebenenfalls unter Mitverwendung von anderen Alkylenoxiden wie Propylenoxid, und können sich im Polyethermolekül an beliebiger Stelle befinden.
   Dem erfindungsgemäßen Polyethergemisch werden oft vorteilhaft 5 bis 40 Gew.-%, vorzugsweise 10 bis 20 Gew.-%, eines mindestens zwei gegenüber Isocyanaten aktive Wasserstoffatome aufweisenden Polyesters, vorzugsweise eines Polyesters auf Basis von Phthal-und/oder Terephthalsäure einer OH-Zahl von 100 bis 500, bevorzugt 200 bis 400, zugesetzt. Bei diesen Polyestern handelt es sich in der Regel um Hydroxylgruppen aufweisende Polyester.
3. Erfindungsgemäß werden unter den Verschäumungsbedingungen verdampfbare Kohlenwasserstoffe als Treibmittel eingesetzt, z.B. Propan, Butan, n- und/oder i-Pentan, Hexan, Heptan, Isooctan, Cyclopentan, Cyclopenten. Bevorzugte Treibmittel sind C₃-C₇-Kohlenwasserstoffe, insbesondere n- und/oder i-Pentan und/oder Cyclopentan. Diese Treibmittel werden in der Regel in Mengen von 0,1 bis 20 Gew.-%, vorzugsweise 0,2 bis 15 Gew.-%, (bezogen auf Komponente 2) verwendet.
4. Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19 bis 20, beschrieben.
5. Gegebenenfalls werden weitere Treibmittel und an sich bekannte Hilfs- und Zusatzmittel mitverwendet wie
   a) Wasser und/oder andere leicht flüchtige organische Substanzen als Treibmittel,
   b) Katalysatoren der an sich bekannten Art in Mengen von bis zu 10 Gew.-%, bezogen auf Komponente 2,
   c) oberflächenaktive Zusatzstoffe, wie Emulgatoren und Schaumstabilisatoren,
   d) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxanbekannten Art, z.B. Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß-oder Schlämmkreide.

Diese gegebenenfalls mitzuverwendenden Hilfs- und Zusatzstoffe werden beispielsweise in der DE-OS 27 32 292, Seiten 21 bis 24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, Polyurethane herausgegeben von Vieweg und Höchtlen, Carl Hanser Verlag, München 1966, z.B. auf den Seiten 103 bis 113, beschrieben.

Die Schaumstoffe auf Isocyanatbasis werden in an sich bekannter Weise hergestellt.

Werden Polyurethanschaumstoffe hergestellt, so arbeitet man in der Regel bei einer Kennzahl von 90-130, während die Herstellung von Isocyanuratschaumstoffen in der Regel bei Kennzahlen über 130 bis 500, vorzugsweise 150-400, durchgeführt wird.

Durchführung des Verfahrens zur Herstellung von Polyurethanschaumstoffen:

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 27 64 565 beschrieben werden. Einzelheiten über Verarbeitungseinrichtungen, die auch erfindungsgemäß in Frage kommen, werden im Kunststoff-Handbuch, Band VII, Polyurethane, herausgegeben von Vieweg und Höchtlen, Carl Hanser Verlag, München 1966, z.B. auf den Seiten 121 bis 205, beschrieben.

Erfindungsgemäß lassen sich auch kalthärtende Schaumstoffe herstellen (vgl. GB-PS 11 62 517, DE-OS 21 53 086).

Harte Schaumstoffe werden in der Regel durch Blockverschäumung oder nach dem an sich bekannten Doppeltransportbandverfahren hergestellt.

Die nach der Erfindung erhältlichen Produkte finden z.B. als Dämmplatten für die Dachisolierung sowie als Dämmschicht in Hausgeräten Anwendung.

### Ausführungsbeispiele

(GT = Gewichtsteile)

### Beispiel 1

### Herstellung eines PUR-Hartschaumstoffes

Polyol-Komponente:

Mischung aus

| | |
|---|---|
| 70 GT | eines Polyether-Polyols der Hydroxylzahl 450, hergestellt durch Polyaddition von 1,2 Propylenoxid an Sucrose, |
| 30 GT | eines Polyether-Polyols der Hydroxylzahl 450, hergestellt durch Polyaddition von Ethylenoxid an Glyzerin, |
| 2 GT | Wasser, |
| 2 GT | eines Schaumstabilisators auf Silicon-Basis (Tegostab® B 8411), |
| 2 GT | N,N-Dimethylcyclohexylamin |

Isocyanat-Komponente:

Polymeres MDI, NCO-Gehalt 31,5 Gew.-%.

100 GT der Polyol-Komponente und 15 GT Cyclopentan werden mittels eines hochtourigen Rührers (4000 UpM) bei 20°C intensiv gemischt. Es entsteht eine Emulsion von fein verteiltem Cyclopentan im Polyol. 115 GT dieser Mischung werden anschließend mit 131 GT der Isocyanat-Komponente verrührt. Die Reaktionsmischung wird in einen offenen Karton gegossen und schäumt auf.

Man erhält einen PUR-Hartschaumstoff mit einem mittleren Zelldurchmesser von 120 µm bei einer frei geschäumten Rohdichte von 24 kg/m³. Die Wärmeleitfähigkeit, gemessen nach Anacon bei 24°C, beträgt 0,020 W/Km.

### Beispiel 2 (Vergleich)

### Herstellung eines PUR-Hartschaumstoffes

Polyol-Komponente:

Mischung aus

| | |
|---|---|
| 70 GT | eines Polyether-Polyols der Hydroxylzahl 450, hergestellt durch Polyaddition von 1,2 Propylenoxid an Sucrose, |
| 30 GT | eines Polyether-Polyols der Hydroxylzahl 450, hergestellt durch Polyaddition von 1,2 Propylenoxid an Glyzerin, |
| 2 GT | Wasser, |
| 2 GT | eines Schaumstabilisators auf Silicon-Basis (Tegostab® B 8411), |
| 2,8 GT | N,N-Dimethylcyclohexylamin |

Isocyanat-Komponente:

Polymeres MDI, NCO-Gehalt 31,5 Gew.-%.

100 GT der Polyol-Komponente und 15 GT Cyclopentan werden mittels eines hochtourigen Rührers (4000 UpM) bei 20°C intensiv gemischt. Es entsteht eine homogene, klare Lösung von Cyclopentan in Polyol. 115 GT dieser Mischung werden anschließend mit 131 GT der Isocyanat-Komponente verrührt. Die Reaktionsmischung wird in einen offenen Karton gegossen und schäumt auf.

Man erhält einen PUR-Hartschaumstoff mit einem mittleren Zelldurchmesser von 250 µm bei einer frei geschäumten Rohdichte von 24 kg/m³. Die Wärmeleitfähigkeit, gemessen nach Anacon bei 24°C, beträgt 0,023 W/Km.

### Beispiel 3

### Herstellung eines PUR-Hartschaumstoffes

Polyol-Komponente:

Mischung aus

| | |
|---|---|
| 60 GT | eines Polyether-Polyols der Hydroxylzahl 450, hergestellt durch Polyaddition von 1,2 Propylenoxid an Sorbit, |
| 10 GT | eines Phthalsäure-Diethylenglykolesters der Hydroxylzahl 300, |
| 30 GT | eines Polyether-Polyols der Hydroxylzahl 500, hergestellt durch Polyaddition von Ethylenoxid an Pentaerythrit, |
| 2 GT | Wasser, |
| 2 GT | eines Schaumstabilisators auf Silicon-Basis (Tegostab® B 8426), |
| 1,8 GT | N,N-Dimethylcyclohexylamin |

Isocyanat-Komponente:

Polymeres MDI, NCO-Gehalt 31,5 Gew.-%.

100 GT der Polyol-Komponente und 12 GT Cyclopentan werden mittels eines hochtourigen Rührers (4000 UpM) bei 20°C intensiv gemischt. Es entsteht eine Emulsion von fein verteiltem Cyclopentan in Polyol. 112 GT dieser Mischung werden anschließend mit 132 GT der Isocyanat-Komponente verrührt. Die Reaktionsmischung wird in einen offenen Karton gegossen und schäumt auf.

Man erhält einen PUR-Hartschaumstoff mit einem mittleren Zelldurchmesser von 120 µm bei einer frei geschäumten Rohdichte von 25 kg/m³. Die Wärmeleitfähigkeit, gemessen nach Anacon bei 24°C, beträgt 0,020 W/Km.

### Beispiel 4

### Herstellung eines PUR-Hartschaumstoffes

Polyol-Komponente:

Mischung aus

| | |
|---|---|
| 60 GT | eines Polyether-Polyols der Hydroxylzahl 450, hergestellt durch Polyaddition von 1,2 Propylenoxid an Sorbit, |
| 10 GT | eines Phthalsäure-Diethylenglykolesters der Hydroxylzahl 300, |
| 30 GT | eines Polyether-Polyols der Hydroxylzahl 500, hergestellt durch Polyaddition von Ethylenoxid an Pentaerythrit, |
| 2 GT | Wasser, |
| 2 GT | eines Schaumstabilisators auf Silicon-Basis (Tegostab® B 8426), |
| 1,8 GT | N,N-Dimethylcyclohexylamin |

Isocyanat-Komponente:

Polymeres MDI, NCO-Gehalt 31,5 Gew.-%.

100 GT der Polyol-Komponente und 12 GT n-Pentan werden mittels eines hochtourigen Rührers (4000 UpM) bei 20°C intensiv gemischt. Es entsteht eine Emulsion von fein verteiltem n-Pentan im Polyol. 112 GT dieser Mischung werden anschließend mit 132 GT der Isocyanat-Komponente verrührt. Die Reaktionsmischung wird in einen offenen Karton gegossen und schäumt auf.

Man erhält einen PUR-Hartschaumstoff mit einem mittleren Zelldurchmesser von 120 µm bei einer frei geschäumten Rohdichte von 25 kg/m³. Die Wärmeleitfähigkeit, gemessen nach Anacon bei 24°C, beträgt 0,022 W/Km.

## Patentansprüche

1. Verfahren zur Herstellung von Schaumstoffen auf Isocyanatbasis durch Umsetzung von
1) Polyisocyanaten mit
2) mindestens zwei gegenüber Isocyanaten aktive Wasserstoffatome aufweisenden Verbindungen vom Molekulargewicht 400 bis 10.000 in Gegenwart von
3) unter den Verschäumungsbedingungen verdampfbaren Kohlenwasserstoffen als Treibmittel und gegebenenfalls in Gegenwart von
4) Verbindungen mit mindestens zwei gegenüber Isocyanaten reaktionsfähigen Wasserstoffatomen und einem Molekulargewicht von 32 bis 399 sowie gegebenenfalls in Gegenwart von
5) weiteren Treibmitteln und an sich bekannten Hilfs-und Zusatzstoffen,
dadurch gekennzeichnet, daß als Komponente 2) Mischungen von a) mindestens zwei gegenüber Isocyanaten aktive Wasserstoffatome aufweisenden, stickstoffreien Polyethern, die Oxyethylenreste enthalten, und b) mindestens zwei gegenüber Isocyanaten aktive Wasserstoffatome aufweisenden Polyethern, die von Oxyethylengruppen frei sind, wobei die Polyetherkomponente 2a) eine Funktionalität von höchstens 4 und die Polyetherkomponente 2b) eine Funktionalität von mindestens 4 aufweist, verwendet werden, in denen der als Treibmittel verwendete Kohlenwasserstoff teilweise gelöst, teilweise dispergiert ist, so daß eine Emulsion entsteht.

2. Verfahren gemäß Anspruch 1, dadurch gekennzeichnet, daß als Treibmittel C₃-C₇-Kohlenwasserstoffe verwendet werden.

3. Verfahren gemäß Anspruch 1 und 2, dadurch gekennzeichnet, daß als Treibmittel n- und/oder i-Pentan und/oder Cyclopentan verwendet wird.

4. Verfahren gemäß Anspruch 1 und 2, dadurch gekennzeichnet, daß als Treibmittel Mischungen aus Cycloalkanen und linearen oder verzweigten Alkanen verwendet werden.

5. Verfahren gemäß Anspruch 1 bis 4, dadurch gekennzeichnet, daß als Co-Treibmittel 0,5 bis 3,5 Gew.-% vorzugsweise 1 bis 2,5 Gew.-%, bezogen auf Komponente 2), Wasser eingesetzt wird.

6. Verfahren gemäß Anspruch 1 bis 5, dadurch gekennzeichnet, daß die Polyetherkomponente 2a) in einer Vorreaktion mit überschüssigem Polyisocyanat zu einem Isocyanatgruppen aufweisenden Prepolymer umgesetzt wird, das dann mit den übrigen Komponenten unter Bildung des Schaumstoffs zur Reaktion gebracht wird.

7. Verfahren gemäß Anspruch 1 bis 6, dadurch gekennzeichnet, daß die Polyetherkomponente 2a) ein Trimethylpropan- und/oder Glyzerin-gestarteter Polyether und die Polyetherkomponente 2b) ein Sucrose- und/oder Sorbit-gestarteter Polyether ist.

8. Verfahren gemäß Anspruch 1 bis 7, dadurch gekennzeichnet, daß der Polyethermischung 2) 5 bis 40 Gew.-%, vorzugsweise 10 bis 20 Gew.-%, eines mindestens zwei gegenüber Isocyanaten aktive Wasserstoffatome aufweisenden Polyesters beigemischt wird.

9. Verfahren gemäß Anspruch 1 bis 8, dadurch gekennzeichnet, daß als Polyester ein Polyester der Phthal- und/ oder Terephthalsäure der OH-Zahl 100 bis 500, vorzugsweise 200 bis 400, verwendet wird.

## Claims

1. A process for producing isocyanate foams by the reaction of
1) polyisocyanates with
2) compounds having at least two hydrogen atoms active towards isocyanates and a molecular weight of from 400 to 10,000 in the presence of
3) hydrocarbons which are vaporisable under the foaming conditions as blowing agents and optionally in the presence of
4) compounds having at least two hydrogen atoms capable of reacting with isocyanates and a molecular weight of from 32 to 399, as well as optionally in the presence of
5) additional blowing agents and known per se auxiliary materials and additives,
characterised in that mixtures of a) nitrogen-free polyethers having at least two hydrogen atoms active towards isocyanates and which contain oxyethylene groups, and b) polyethers having at least two hydrogen atoms active towards isocyanates and which are free from oxyethylene groups are used as component 2), the polyether component 2a) having a functionality of at most 4 and the polyether component 2b) having a functionality of at least 4, in which mixtures the hydrocarbon used as a blowing agent is partly dissolved and partly dispersed, so that an emulsion is formed.

2. A process according to claim 1, characterised in that C₃-C₇ hydrocarbons are used as blowing agents.

3. A process according to claims 1 and 2, characterised in that n- and/or i-pentane and/or cyclopentane are used as blowing agents.

4. A process according to claims 1 and 2, characterised in that mixtures of cycloalkanes and linear or branched alkanes are used as blowing agents.

5. A process according to claims 1 to 4, characterised in that 0.5 to 3.5 wt.% and preferably 1 to 2.5 wt.% water, based on component 2), is used as a concomitant blowing agent.

6. A process according to claims 1 to 5, characterised in that in a preliminary reaction the polyether component 2a) is reacted with excess polyisocyanate to produce a prepolymer containing isocyanate groups, which prepolymer is then reacted with the remaining components, with formation of the foam.

7. A process according to claims 1 to 6, characterised in that the polyether component 2a) is a polyether obtained using a trimethylolpropane and/or glycerol starter and the polyether component 2b) is a polyether obtained using a sucrose and/or sorbitol starter.

8. A process according to claims 1 to 7, characterised in that 5 to 40 wt.% and preferably 10 to 20 wt.% of a polyester having at least two hydrogen atoms active towards isocyanates is added to the polyether mixture 2).

9. A process according to claims 1 to 8, characterised in that a polyester of phthalic acid and/or terephthalic acid having an OH number of 100 to 500, preferably 200 to 400, is used as polyester.

## Revendications

1. Procédé pour la préparation de mousses à base d'isocyanates, par mise en réaction
1) de polyisocyanates avec
2) des composés présentant au moins deux atomes d'hydrogène actifs vis-à-vis d'isocyanates, possédant un poids moléculaire de 400 à 10.000, en présence
3) d'hydrocarbures aptes à s'évaporer dans les conditions de transformation en mousse, à titre d'agents moussants, et le cas échéant, en présence
4) de composés contenant au moins deux atomes d'hydrogène aptes à réagir vis-à-vis d'isocyanates et possédant un poids moléculaire de 32 à 399, et le cas échéant, en présence
5) d'autres agents moussants et d'adjuvants et d'additifs connus en soi,
caractérisé en ce qu'on utilise, à titre de composant 2), des mélanges de a) des polyéthers non azotés présentant au moins deux atomes d'hydrogène actifs vis-à-vis d'isocyanates, qui contiennent des résidus d'oxyéthylène, et b) des polyéthers présentant au moins deux atomes d'hydrogène actifs vis-à-vis d'isocyanates, qui sont exempts de groupes oxyéthylène, le composant de polyéther 2a) présentant une fonctionnalité maximale de 4 et le composant de polyéther 2b) présentant une fonctionnalité minimale de 4, dans lesquels l'hydrocarbure utilisé comme agent moussant se trouve en partie dissous et en partie dispersé de manière à former une émulsion.

2. Procédé selon la revendication 1, caractérisé en ce qu'on utilise, à titre d'agent moussant, des hydrocarbures en C₃-C₇.

3. Procédé selon les revendications 1 et 2, caractérisé en ce qu'on utilise, à titre d'agent moussant, le n- et/ou i-pentane et/ou le cyclopentane.

4. Procédé selon les revendications 1 et 2, caractérisé en ce qu'on utilise, à titre d'agent moussant, des mélanges de cycloalcanes et d'alcanes linéaires ou ramifiés.

5. Procédé selon les revendications 1 à 4, caractérisé en ce qu'on met en oeuvre, à titre de coagent moussant, de l'eau à raison de 0,5 à 3,5% en poids, de préférence de 1 à 2,5% en poids rapportés au composant 2).

6. Procédé selon les revendications 1 à 5, caractérisé en ce qu'on fait réagir le composant de polyéther 2a) dans une réaction préalable avec du polyisocyanate en excès pour obtenir un prépolymère présentant des groupes isocyanate, que l'on amène ensuite à réagir avec les autres composants pour former la mousse.

7. Procédé selon les revendications 1 à 6, caractérisé en ce que le composant de polyéther 2a) est un polyéther amorcé avec du triméthylolpropane et/ou avec du glycérol, et le composant de polyéther 2b) est un polyéther amorcé avec du sucrose et/ou avec du sorbitol.

8. Procédé selon les revendications 1 à 7, caractérisé en ce qu'on ajoute par mélangeage, au mélange de polyéthers 2), à concurrence de 5 à 40% en poids, de préférence de 10 à 20% en poids, un polyester présentant au moins deux atomes d'hydrogène actifs vis-à-vis d'isocyanates.

9. Procédé selon les revendications 1 à 8, caractérisé en ce qu'on utilise, à titre de polyester, un polyester de l'acide phtalique et/ou de l'acide téréphtalique possédant un indice OH de 100 à 500, de préférence de 200 à 400.
